# EUROPEAN PATENT APPLICATION

(11) **EP 4 717 835 A1**
(43) Date of publication of application: **01.04.2026**
(21) Application number: 25169550.8
(22) Date of filing: 09.04.2025
(51) Int. Cl.: E03C 1/04

(54) **NOISE REDUCTION STRUCTURE OF PULLING FAUCET WITHOUT WEIGHT, ANTI-FLUSHING OUT STRUCTURE AND PULLING FAUCET WITHOUT WEIGHT**

(30) Priority: 30.09.2024 CN 202411388221
(71) Applicant: Zhangzhou Solex Smart Home Co., Ltd., Changtai County Zhangzhou City, Fujian Province 363900 (CN)
(72) Inventor: YANG, Jianhong, Zhangzhou City, 363900 (CN); CHEN, Wenxing, Zhangzhou City, 363900 (CN); PENG, Jijin, Zhangzhou City, 363900 (CN)
(74) Representative: Verscht, Thomas Kurt Albert

(57) **Abstract**

The present disclosure discloses a noise reduction structure of a pulling faucet without a weight, it comprises: a support tube, a pulling tube, an elastic restore member and an inner liner; the support tube is connected to a faucet body through an intermediate connector; the elastic restore member is sleeved outside of the pulling tube, and one end is a fixed end and the other end is connected to the pulling tube to form a linkage end; the inner liner is disposed between an inner wall of the support tube and an outer wall of the elastic restore member; and the inner liner comprises one or more shrinkage cracks along the inner wall of the support tube in a direction of a bending radius of the support tube from an outer side to an inner side, so that a portion of the inner liner on both sides of the one or more shrinkage cracks is brought together in a direction along which the one or more shrinkage cracks close when the inner liner passes through and is disposed in the support tube. The present disclosure further discloses an anti-flushing out structure of the pulling faucet without the weight and the pulling faucet without the weight.

## Description

### RELATED APPLICATIONS

This application claims priority to Chinese patent application number 202411388221.0, filed on September 30, 2024. Chinese patent application number 202411388221.0 is incorporated herein by reference.

### FIELD OF THE DISCLOSURE

The present disclosure relates to a water outflow device, and in particular relates to a pulling faucet.

### BACKGROUND OF THE DISCLOSURE

Faucets are contacted basically every day in family daily life, and needs for the faucets are also becoming bigger due to frequent frequency of use. Styles of the faucets are also increasing with the development of the sanitary industries, and water flowing out of water outflow parts of the faucets is no longer limited to the traditional fixed methods. At present, the pulling faucet has been widely used by people and brings people a lot of convenience due to its convenience of pulling. The existing pulling faucets rely on a weight and other components disposed on lower sides of bodies of the faucets, at the same time, pulling hoses need to be lengthened in order to ensure a pulling range, a production cost of the faucets is increased, in addition, the weight is generally disposed below a sink, and jamming of an inner pipe caused by interference with other parts occurs easily in a process of pulling pipes so as to bring great inconvenience for use by people.

In this way, the pulling faucet without the weight has appeared in the existing technologies, a fixed inner tube is arranged for water inflow, and the pulling tube is disposed outside of the inner tube. The pulling tube will squeeze a spring to accumulate an elastic restore force when pulling, so that the pulling tube is automatically restored under the elastic restore force after releasing, a purpose is achieved without the weight, however, the traditional inner tube is directly locked on the bodies of the faucets through a thread, a support tube can also swing relative to the bodies of the faucets for adjustment, therefore, the support tube swings to drive the inner tube to swing together, however, the inner tube is fixed to the bodies of the faucets, so the inner tube will be twisted or a threaded connection between the inner tube and the faucet body will be loosened during the swinging process. In addition, the spring is easy to rub and contact the support tube in the pulling process due to existence of the spring in the pulling faucet without the weight, as the two are made of metal, sharp and ear-piercing noise is generated in the rubbing process, and an experience of the user will be influenced. In addition, as a counterweight block is eliminated, an elasticity of the spring cannot be too large considering a hand feel of the user for pulling, otherwise the user needs to pull a water outflow device using a lot of force. However, this method also enables the water outflow device under a state of a water pressure, especially high pressure, to be easily driven by water flow to be separated from the support tube.

### BRIEF SUMMARY OF THE DISCLOSURE

A main technical problem to be solved by the present disclosure is to provide a noise reduction structure of a pulling faucet without a weight to reduce noise generated during a pulling process.

Another main technical problem to be solved by the present disclosure is to provide an anti-flushing out structure of a pulling faucet without a weight to avoid a situation in which a water outflow assembly is flu shed out under high water pressure.

In order to solve the aforementioned technical problems, the present disclosure provides a noise reduction structure of a pulling faucet without a weight, it comprises: a support tube, a pulling tube, an elastic restore member and an inner liner;

The support tube is connected to a faucet body through an intermediate connector; the elastic restore member is sleeved outside of the pulling tube, and one end is a fixed end and the other end is connected to the pulling tube to form a linkage end; and the inner liner is disposed between an inner wall of the support tube and an outer wall of the elastic restore member;

The inner liner comprises one or more shrinkage cracks along the inner wall of the support tube in a direction of a bending radius of the support tube from an outer side to an inner side, so that a portion of the inner liner on both sides of the one or more shrinkage cracks is brought together in a direction along which the one or more shrinkage cracks close when the inner liner passes through and is disposed in the support tube.

The present disclosure further provides a noise reduction structure of a pulling faucet without a weight, it comprising: a support tube, a pulling tube, an elastic restore member and an inner liner;

The support tube is connected to a faucet body through an intermediate connector; the elastic restore member is sleeved outside of the pulling tube, and one end is a fixed end and the other end is connected to the pulling tube to form a linkage end; and the inner liner is disposed between an inner wall of the support tube and an outer wall of the elastic restore member;

The inner liner comprises one or more shrinkage cracks along the inner wall of the support tube in a direction of a bending radius of the support tube from an outer side to an inner side, so that the inner liner has a bending radian on the inner side that is greater than that on the outer side in a direction of a bending radius of the support tube when the inner liner passes through and is disposed in the support tube.

In a preferred embodiment, the one or more shrinkage cracks have a structure with a width that gradually increases in the direction of the bending radius of the support tube from the outer side to the inner side.

In a preferred embodiment, the inner liner comprises a trunk and ribs connected to both sides of the trunk, and the ribs form a tubular structure with the trunk; and the ribs are configured with the one or more shrinkage cracks along a lengthwise direction of the trunk.

In a preferred embodiment, the elastic restore member is a spring, and a width of the one or more shrinkage cracks is smaller than a diameter of coils of the spring after being brought together.

In a preferred embodiment, an appearance of the inner liner has a straight-tube fish-skeleton shape, and opposite ends of the ribs on the both sides of the inner liner are spaced apart to form a gap when the inner liner is in a relaxed state.

In a preferred embodiment, the trunk conforms to the inner wall of the support tube when the inner liner passes through and is disposed in the support tube.

In a preferred embodiment, a material of the inner liner is plastic or hard rubber.

The present disclosure further provides a pulling faucet without a weight, it comprises the noise reduction structure and a water outflow assembly;

One end of the pulling tube is fixedly connected to the water outflow assembly, the other end extends outward in a radial direction to form a first position-limited surface, an inner wall of one end of the support tube facing the water outflow assembly extends inward in a radial direction to form a second position-limited surface, and the elastic restore member is connected to and is disposed between the first position-limited surface and the second position-limited surface;

The first position-limited surface squeezes the elastic restore member to accumulate elastic restore force when the water outflow assembly drives the pulling tube to extend out in a direction away from the support tube.

In a preferred embodiment, the intermediate connector is fixedly connected to the faucet body, and the support tube is rotatably connected to the intermediate connector.

In a preferred embodiment, it further comprises an inner tube; the inner tube passes through and is disposed in the pulling tube, an inner tube connector is connected to a tail end of the inner tube, a position-limited space for clamping the inner tube connector is formed between the intermediate connector and the faucet body, and the position-limited space applies the inner tube a position-limited force along a lengthwise direction of the inner tube.

In a preferred embodiment, a first position-limited member is disposed on a tail end of the pulling tube, and the first position-limited member extends outward along the radial direction of the pulling tube to form the first position-limited surface.

In a preferred embodiment, the pulling tube is fixedly connected to the first position-limited member through a connector; and the connector comprises an insertion portion inserted into the pulling tube and a connection portion disposed outside of the pulling tube, the connection portion extends outward relative to the insertion portion along a radial direction, an outer wall of the connection portion is fixed to the first position-limited member by a thread, and a Y-shaped sealing ring is disposed between an inner wall of the connection portion and an outer wall of the inner tube.

In a preferred embodiment, a second position-limited member is disposed in the one end of the support tube facing the water outflow assembly, and the second position-limited member extends inward along the radial direction to form the second position-limited surface.

In a preferred embodiment, the second position-limited member comprises an avoidance opening configured for the pulling tube to move.

In a preferred embodiment, the inner tube has a hardness of 80-95A, and the pulling tube has a hardness of 70-85A.

The present disclosure further provides an anti-flushing out structure of a pulling faucet without a weight, it comprises: a faucet body, an inner tube, a support tube, an elastic restore member, a pulling tube and a water outflow assembly;

The support tube is connected to the faucet body through an intermediate connector; the elastic restore member is sleeved outside of the pulling tube, and one end is a fixed end and the other end is connected to the pulling tube to form a linkage end;

One end of the inner tube is a water inflow end, and a water outflow buffer connector is disposed on the other end; and the water outflow buffer connector is used to change water flow flowing along an axial direction of the inner tube into water outflow along a lateral direction of the inner tube.

In a preferred embodiment, one end of the water outflow buffer connector along the axial direction of the inner tube is a closed end, and one or more water outlets are disposed on a side wall along a radial direction of the inner tube.

In a preferred embodiment, the one or more water outlets are multiple and are disposed along a circumferential direction of the water outflow buffer connector at intervals.

In a preferred embodiment, an outer wall of the water outflow buffer connector is a circular arc surface.

The present disclosure further provides a pulling faucet without a weight, it comprises the faucet body and the anti-flushing out structure;

One end of the pulling tube is fixedly connected to the water outflow assembly, the other end extends outward in a radial direction to form a first position-limited surface, an inner wall of one end of the support tube facing the water outflow assembly extends inward in a radial direction to form a second position-limited surface, and the elastic restore member is connected to and is disposed between the first position-limited surface and the second position-limited surface;

The first position-limited surface squeezes the elastic restore member to accumulate elastic restore force when the water outflow assembly drives the pulling tube to extend out in a direction away from the support tube.

In a preferred embodiment, the intermediate connector is fixedly connected to the faucet body, and the support tube is rotatably connected to the intermediate connector.

In a preferred embodiment, it further comprises the inner tube; the inner tube passes through and is disposed in the pulling tube, an inner tube connector is connected to a tail end of the inner tube, a position-limited space for clamping the inner tube connector is formed between the intermediate connector and the faucet body, and the position-limited space provides the inner tube a position-limited force along a lengthwise direction of the inner tube.

In a preferred embodiment, a first position-limited member is disposed on a tail end of the pulling tube, and the first position-limited member extends outward along the radial direction of the pulling tube to form the first position-limited surface.

In a preferred embodiment, the pulling tube is fixedly connected to the first position-limited member through a connector; the connector comprises an insertion portion inserted into the pulling tube and a connection portion disposed outside of the pulling tube, the connection portion extends outward relative to the insertion portion along a radial direction, an outer wall of the connection portion is fixed to the first position-limited member by a thread, and a Y-shaped sealing ring is disposed between an inner wall of the connection portion and an outer wall of the inner tube.

In a preferred embodiment, a second position-limited member is disposed in the one end of the support tube facing the water outflow assembly, and the second position-limited member extends inward along the radial direction to form the second position-limited surface.

In a preferred embodiment, the second position-limited member comprises an avoidance opening configured for the pulling tube to move.

Compared with the existing techniques, the technical solution of the present disclosure has the following advantages.

The present disclosure provides the noise reduction structure of the pulling faucet without the weight, the inner liner is disposed between the spring and the support tube, and a sharp noise caused by the spring directly rubbing the support tube can be prevented in a pulling process. A material of the inner liner is set to be plastic or hard rubber, and the noise generated by the friction between the inner liner and the spring can be further reduced, thereby improving the user experience. In addition, the inner liner comprises one or more shrinkage cracks in the direction of the bending radius of the support tube from an outer side to an inner side along the inner wall of the support tube, so that the portion of the inner liner on both sides of the one or more shrinkage cracks bring the inner liner together in the direction along which the one or more shrinkage cracks close when the inner liner passes through and is disposed in the support tube, thereby inserting into the support tube shaped in an arc, bending following with a radian of the support tube, and fitting perfectly into the inner wall of the support tube.

The present disclosure provides the anti-flushing out structure of the pulling faucet without the weight, the water outflow buffer connector is disposed on a water outflow side of the inner tube, so that the water flow flowing along the axial direction of the inner tube can change into water outflow along the lateral direction of the inner tube, thereby greatly reducing impact force of the water flow applied on the water outflow assembly, therefore, even when the water outflow has a high pressure and high flow rate, the impact force is not sufficient to overcome an elasticity of the spring and will not cause the water outflow assembly to be flushed out by the water flow.

### BRIEF DESCRIPTION OF THE DRAWINGS

FIG. 1 illustrates a diagrammatic view of preferred embodiment 1 of the present disclosure;
FIG. 2 illustrates an exploded view of preferred embodiment 1 of the present disclosure;
FIG. 3 illustrates a sectional view of preferred embodiment 1 of the present disclosure;
FIG. 4 illustrates a sectional view of a part of preferred embodiment 1 of the present disclosure;
FIG. 5 illustrates a sectional view of a part of preferred embodiment 1 of the present disclosure at another position;
FIG. 6 illustrates a diagrammatic view of preferred embodiment 1 of the present disclosure in a pull-out state;
FIG. 7 illustrates a sectional view of a part of preferred embodiment 2 of the present disclosure;
FIG. 8 illustrates an exploded view of preferred embodiment 3 of the present disclosure;
FIG. 9 illustrates a perspective view of an inner liner in preferred embodiment 3 of the present disclosure;
FIG. 10 illustrates a side view of the inner liner in preferred embodiment 3 of the present disclosure;
FIG. 11 illustrates a sectional view of a part the inner liner that is bent in preferred embodiment 3 of the present disclosure;
FIG. 12 illustrates a sectional view of preferred embodiment 3 of the present disclosure;
FIG. 13 illustrates a sectional view of the inner liner of preferred embodiment 3 of the present disclosure when the inner liner is not inserted into a support tube;
FIG. 14 illustrates a sectional view of preferred embodiment 3 of the present disclosure when the inner liner is inserted into the support tube;
FIG. 15 illustrates a sectional view of preferred embodiment 4 of the present disclosure; and
FIG. 16 illustrates a sectional view of a part of preferred embodiment 4 of the present disclosure.

### DETAILED DESCRIPTION OF THE EMBODIMENTS

The technical solutions in the embodiments of the present disclosure will be described clearly and completely in combination with the accompanying drawings in the embodiments of the present disclosure; it is obvious that the described embodiments are merely some embodiments of the present disclosure rather than all embodiments, and all other embodiments fall within the protective scope of the present disclosure provided that they are obtained based on the embodiments of the present disclosure by a person of ordinary skill in the art without creative works.

In the description of the present disclosure, it should be noted that terms, such as "upper", "lower", "inner", "outer", "top/bottom", indicating orientations or positional relationships based on orientations or positional relationships shown in the accompanying drawings, are merely used to easily describe the present disclosure and simplify the description, rather than indicating or implying that a referenced device or element should have a particular orientation or be constructed and operated with a particular orientation, and therefore should not to be understood as a limitation of the present disclosure. Furthermore, the terms "first" and "second" are merely used for descriptive purposes and should not be understood as indicating or implying relative importance.

In the description of the present disclosure, unless otherwise expressly specified and limited, it is noted that terms, such as "mounted", "disposed with", "socketed/sleeved", and "connected", should develop a broad understanding, for example, "connection" can be a wall-mountable connection, a detachable connection, an integrated connection, a mechanical connection, an electrical connection, a direct connection, an indirect connection via an intermediate medium, or a communication between inner portions of two elements, and the specific meaning of the terms in the present disclosure can be understood in specific conditions for those of ordinary skill in the art.

### Embodiment 1

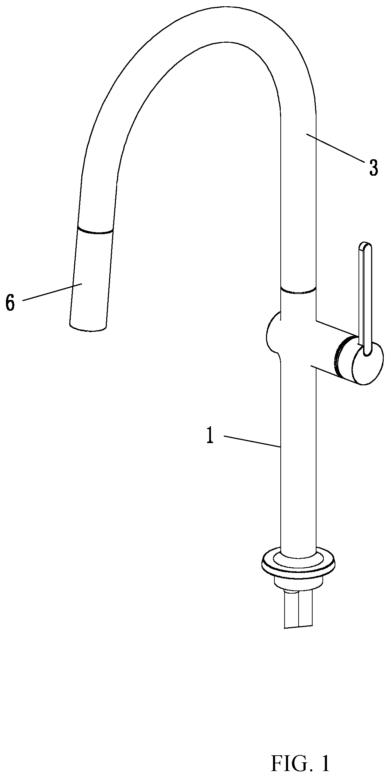

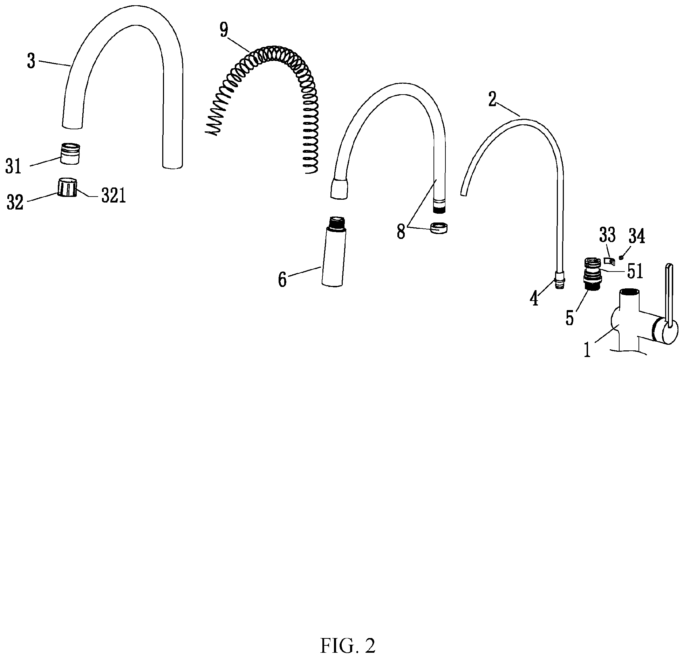

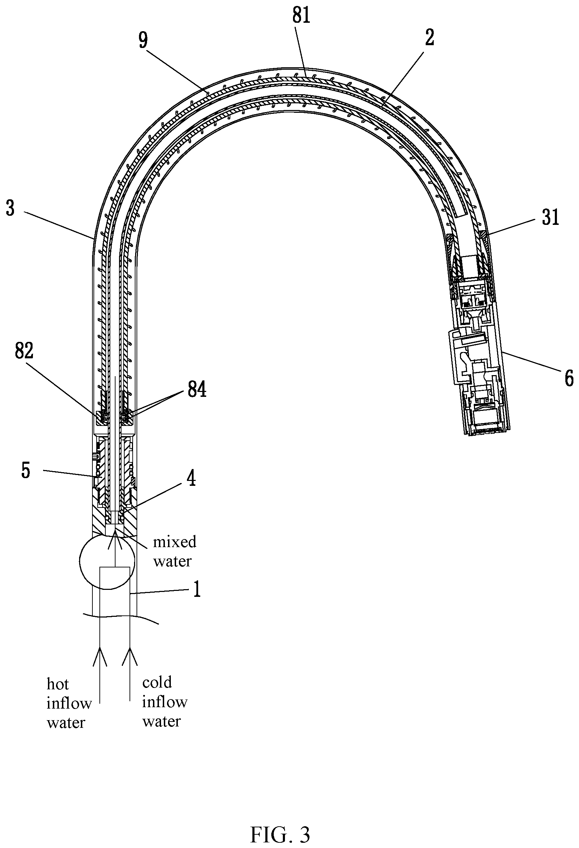

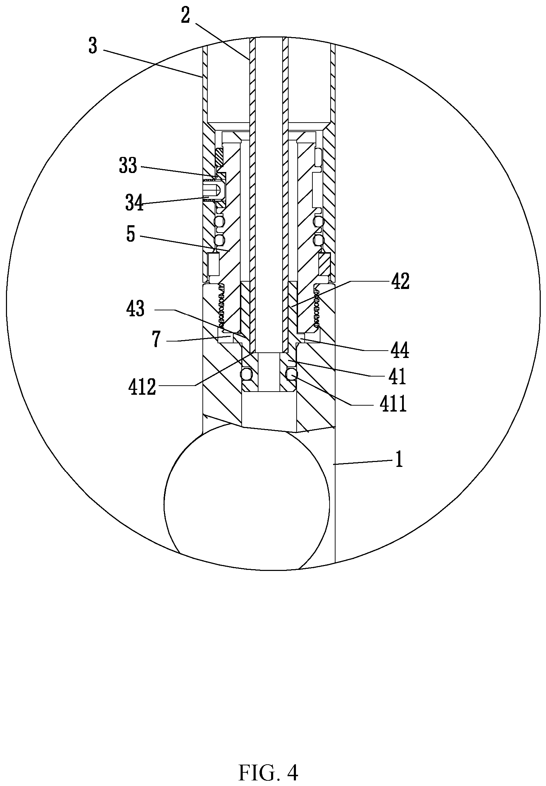

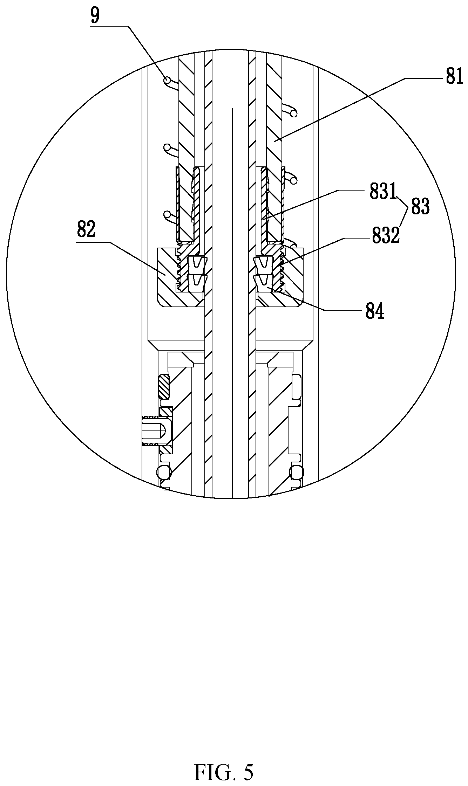

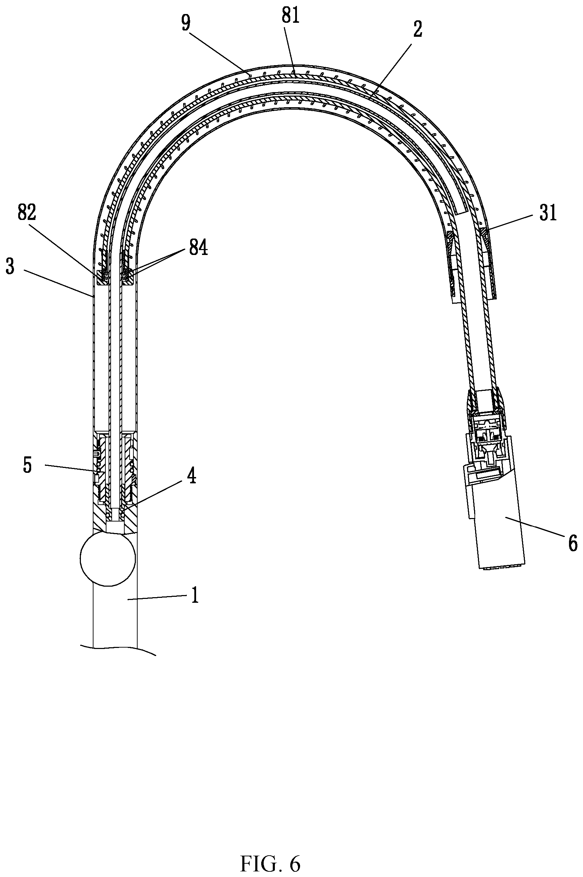

Referring to FIGS. 1-6, this embodiment provides a pulling faucet without a weight, which comprises: a faucet body 1, an inner tube 2, a support tube 3, an inner tube connector 4, an intermediate connector 5, and a water outflow assembly 6.

The support tube 3 is connected to the faucet body through the intermediate connector 5, the intermediate connector 5 is fixedly connected to the faucet body, and a rotatable connection is formed between the support tube 3 and the intermediate connector 5; and in this way, the support tube 3 can rotate relative to the faucet body 1, a swing function of the support tube 3 is therefore achieved, and the support tube 3 can swing to a desired position to discharge water.

The inner tube 2 passes through and is disposed in the support tube 3, a tail end of the inner tube 2 is connected to the inner tube connector 4, a position-limited space 7 configured for clamping the inner tube connector 4 is formed between the intermediate connector 5 and the faucet body 1, and the position-limited space 7 applies a position-limited force for the inner tube 2 along a lengthwise direction of the inner tube 2; and as the intermediate connector 5 will only apply the position-limited force for the inner tube 2 along the lengthwise direction of the inner tube 2, and the inner tube 2 is not limited in a direction around its own axis. Thus, when the support tube 3 rotates, the inner tube 2 rotates together with the support tube 3. Moreover, the inner tube 2 is clamped and fixed by the intermediate connector 5 and the faucet body 1, the intermediate connector 5 and the faucet body 1 stay fixed during a rotation of the support tube 3, so that the position-limited space 7 used to clamp the inner tube 2 will not be influenced no matter how the support tube 3 and the inner tube 2 rotate, and the inner tube 2 will therefore not be loosened due to rotation. In addition, the inner tube 2 rotates together with the support tube 3, thus preventing twisting of the inner tube 2 caused by a relative rotation between the support tube 3 and the inner tube 2.

The inner tube 2 is used for flowing water, therefore, the inner tube connector 4 in this embodiment comprises a first portion 41 disposed in the faucet body 1, a second portion 42 disposed in the intermediate connector 5, and a third portion 43 disposed between the first portion 41 and the second portion 42; an outer wall of the third portion 43 extends outward along a radial direction to form a flange 44 disposed in the position-limited space 7; and therefore, the position-limited space 7 limits a position of the inner tube connector 4 along the lengthwise direction of the inner tube 2 by clamping the flange 44.

In order to enable water flow through the inner tube 2, the first portion 41 comprises a water inflow passage in communication with the inner tube 2 along an axial direction, and a sealing ring 411 is disposed on an outer wall of the first portion 41. In this way, cold water or hot and cold mixed water can only flow into the inner tube 2 through the water inflow passage, then enters into the water outflow assembly 6 after flowing out of a front end of the inner tube 2, and flows out.

At the same time, in order to fix relative positions of the inner tube 2 and the inner tube connector 4, an inner wall of the first portion 41 projects inward along a radial direction to form a position-limited wall 412, and the inner tube 2 abuts the position-limited wall 412 after passing through the second portion 42 and the third portion 43. Moreover, the inner tube 2 is fixed to the inner tube connector 4 by riveting or buckling or welding. In this way, a fixation between the inner tube 2 and the inner tube connector 4 is complete, and a setting of the water inflow passage of the inner tube 2 is achieved.

As this embodiment provides the pulling faucet, a pulling tube assembly 8 is also required, the pulling tube assembly 8 in this embodiment also passes through and is disposed in the support tube 3 and is sleeved outside of the inner tube 2, one end of the pulling tube assembly 8 is fixedly connected to the water outflow assembly 6, the other end extends outward in a radial direction to form a first position-limited surface, an inner wall of an end of the support tube 3 facing the water outflow assembly 6 extends inward in a radial direction to form a second position-limited surface, and the first position-limited surface and the second position-limited surface are connected to an elastic restore member 9; and the first position-limited surface squeezes the elastic restore member 9 to accumulate an elastic restore force when the water outflow assembly 6 drives the pulling tube assembly 8 to extend out in a direction away from the support tube 3. The elastic restore member 9 in this embodiment is preferably a spring. As the pulling tube assembly 8 is sleeved outside of the inner tube 2, the water flowing out of the inner tube 2 will directly enter into the pulling tube assembly 8, as the water outflow assembly 6 is fixed to the pulling tube assembly 8, the water flowing into the pulling tube assembly 8 will finally flow out of the water outflow assembly 6, and an entire water outflow process is complete. Moreover, after the pulling tube assembly 8 extends, the elastic restore member 9 accumulates the elastic restore force due to an arrangement of the elastic restore member 9, so that a pulling tube can be retracted under an action of the restore force of the elastic restore member 9 as long as the water outflow assembly 6 is loosened, and an automatic restore effect can be achieved without the weight.

Specifically, the pulling tube assembly 8 in this embodiment comprises a pulling tube 81 and a first position-limited member 82, the first position-limited member 82 is connected to a tail end of the pulling tube 81 and extends outward along a radial direction of the pulling tube 81 to form the first position-limited surface.

In order to connect the first position-limited member 82 and the pulling tube 81, the pulling tube 81 is fixedly connected to the first position-limited member 82 by a connector 83; and the connector 83 comprises an insertion portion 831 inserted into the pulling tube 81 and a connection portion 832 disposed outside of the pulling tube 81. The insertion portion 831 has an interference fit with the pulling tube 81 to achieve a fixed connection of the insertion portion 831 and the pulling tube 81, and the insertion portion 831 and the pulling tube 81 can also be fixed by riveting or buckling. The connection portion 832 extends outward in a radial direction relative to the insertion portion 831, and an outer wall of the connection portion 832 is fixed to the first position-limited member 82 by a thread, thereby achieving a fixed connection of the connection portion 832 and the first position-limited member 82. In addition, a Y-shaped seal ring 84 is disposed between an inner wall of the connection portion 832 and an outer wall of the inner tube 2. In this way, the water flowing into the pulling tube 81 is prevented from flowing out of a gap between the pulling tube 81 and the inner tube 2.

In order to form the second position-limited surface, a second position-limited member 31 is disposed in an end of the support tube 3 facing the water outflow assembly 6, and the second position-limited member 31 extends inward in a radial direction to form the second position-limited surface. The second position-limited member 31 comprises an avoidance opening configured for the pulling tube 81 to move. In this way, a movement of the pulling tube 81 is not influenced by the second position-limited member 31.

In order to install the second position-limited member 31, a bushing 32 is used in this embodiment, a plurality of convex ribs 321 are disposed on an outer surface of the bushing 32 at intervals along a circumferential direction, and when the bushing 32 is inserted into the avoidance opening of the second position-limited member 31, the convex ribs 321 squeeze the second position-limited member 31 from an inner wall of the avoidance opening, thereby fixing the second position-limited member 31 and the support tube 3 together.

At the same time, in order to improve a hand feel when the support tube 3 rotates, a stop block 33 is further disposed between the support tube 3 and the intermediate connector 5, the stop block 33 can increase a contact area between the support tube 3 and the intermediate connector 5 so as to increase a dampening when the support tube 3 rotates relative to the intermediate connector 5.

In order to install the stop block 33, an outer wall of the intermediate connector 5 is inwardly recessed to form an annular groove 51 along a radial direction, and the stop block 33 is disposed in the groove 51 to be fixedly connected to the support tube 3 by a fixing bolt 34.

In the aforementioned pulling faucet without the weight, the support tube 3 is connected to the faucet body 1 through the intermediate connector 5, the intermediate connector 5 is fixedly connected to the faucet body 1 and rotatably connected to the support tube 3, so that the support tube 3 can rotate around the faucet body 1 to achieve the swinging of the support tube 3. In addition, as the intermediate connector 5 and the support tube 3 apply the inner tube 2 a position-limited force along the lengthwise direction of the inner tube 2, thereby only limiting a movement of the inner tube 2 along the lengthwise direction rather than limiting a rotation of the inner tube 2 around the lengthwise direction. Therefore, when the support tube 3 rotates, the inner tube 2 rotates together with it. Thus, twisting of the inner tube 2 and a looseness between the inner tube 2 and the faucet body are prevented when the support tube 3 rotates.

Finally, in this embodiment, a hardness of the inner tube 2 is 80-95A, and a hardness of the pulling tube 81 is 70-85A, according to a data analysis of a test, pulling in this hardness range is more smooth without clogging, furthermore, the pulling tube and the inner tube use PEX (cross-linked polyethylene) tubes, and friction coefficients of tubes made of this material are smaller, thereby improving a pulling smoothness.

In this embodiment, pulling smoothness of the inner tube 2 and the pulling tube 81 with different hardnesses are tested, and the test results are shown in the following table:

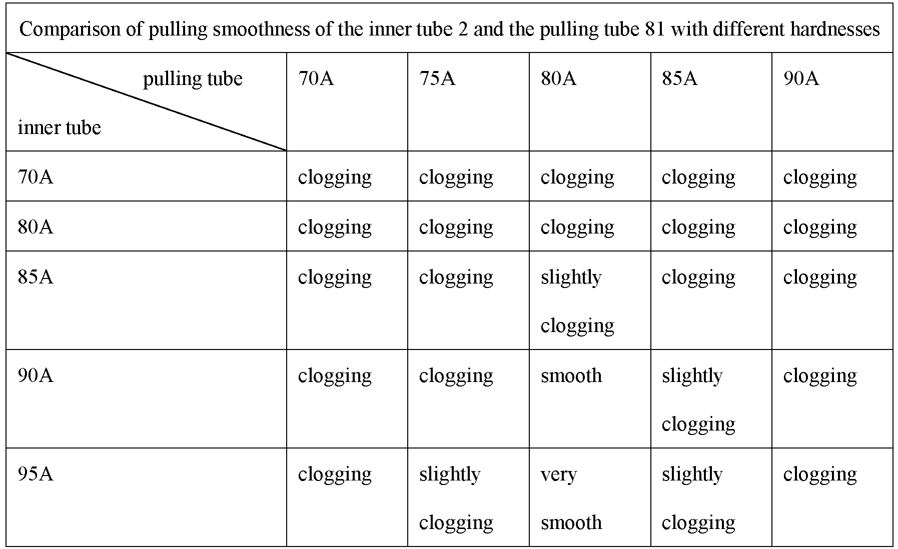

### Embodiment 2

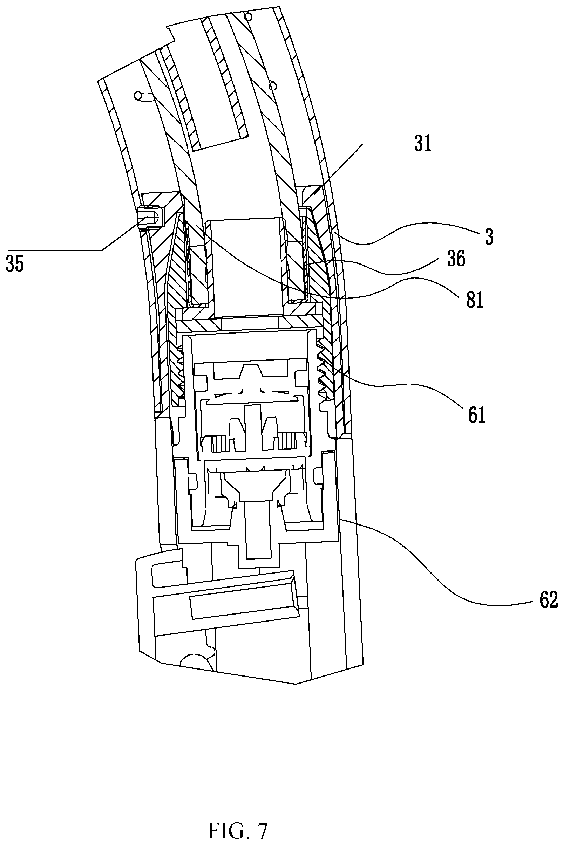

Referring to FIG. 7, this embodiment differs from Embodiment 1 in that the second position-limited member 31 in Embodiment 1 is fixed by the bushing 32. However, in this embodiment, the second position-limited member 31 is directly fixed to the support tube 3 by a screw 35. In addition, a side of the water outflow assembly 6 facing the support tube 3 is disposed with a horn connector 61, a cylindrical portion of the horn connector 61 and a water outflow body 62 in the water outflow assembly 6 are connected by a thread, and a contracted portion of the horn connector 61 is disposed in the second position-limited member 31 and is connected to the pulling tube 81 by riveting through a sealing sleeve 36.

### Embodiment 3

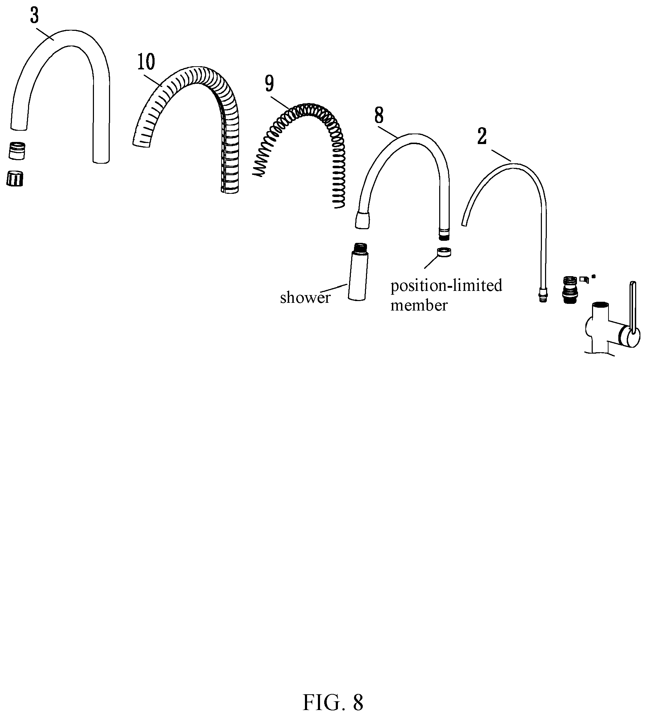

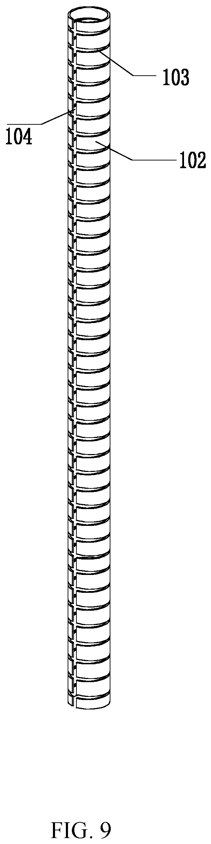

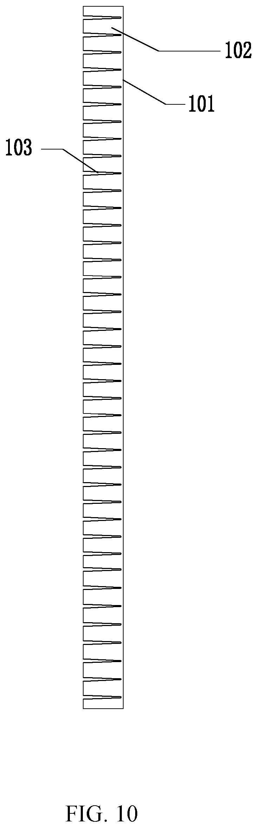

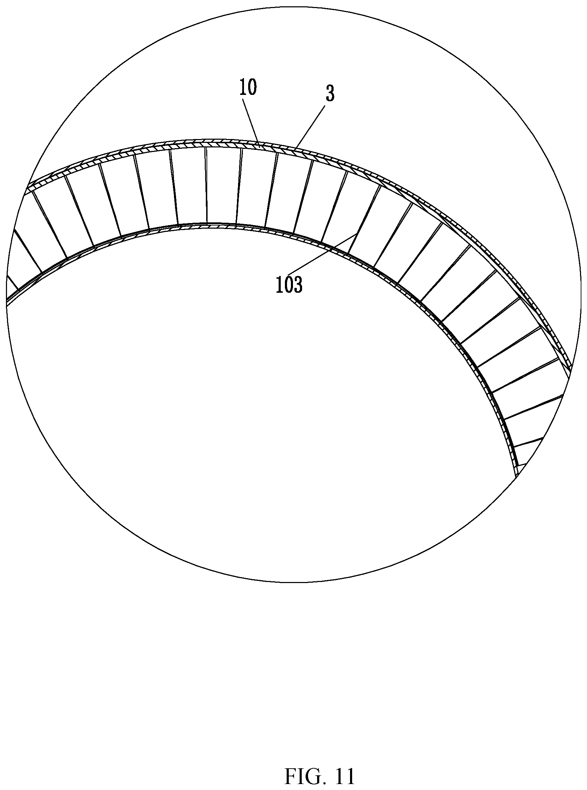

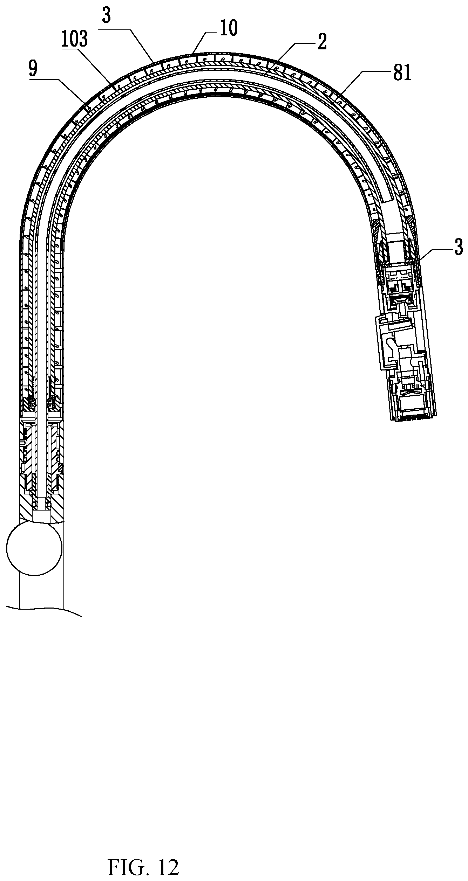

Referring to FIGS. 8-12, in this embodiment, in order to reduce noise generated by friction between the elastic restore member 9 (specifically, the spring is used) and an inner wall of the support tube 3 during a pulling process, an inner liner 10 is disposed between the inner wall of the support tube 3 and an outer wall of the spring 9. Thus, the spring 9 is not in direct contact with the inner wall of the support tube 3, and sharp noises caused by metal contact are avoided. As long as a material of the inner liner 10 is set to be softer, such as plastic or hard rubber, noise generated by friction between the spring 9 and the inner liner 10 can be further reduced. As a result, mute performance during the pulling process is greatly improved, and the user experience is optimized.

As inner and outer sides of the support tube 3 have different bending radians, the inner liner 10 is required to have different bending radians on both sides in order to conform to the inner wall of the support tube 3, therefore, in this embodiment, the inner liner 10 comprises one or more shrinkage cracks 103 along the inner wall of the support tube 3 in a direction of a bending radius of the support tube 3 from an outer side to an inner side, so that a portion of the inner liner 10 on both sides of the one or more shrinkage cracks 103 is brought together in a direction along which the one or more shrinkage cracks 103 close when the inner liner 10 passes through and is disposed in the support tube 3. After being brought together, the inner liner 10 has a bending radian on the inner side that is greater than that of the outer side in a direction of a bending radius of the support tube 3 when the inner liner 10 passes through and is disposed in the support tube 3. This ensures a fit between the inner liner 10 and the inner wall of the support tube 3.

In this embodiment, the one or more shrinkage cracks 103 have a structure with a width that gradually increases along the direction of the bending radius of the support tube 3 from the outer side to the inner side. Therefore, the bending radian of the support tube 3 gradually increases from the outer side to the inner side of the support tube 3, therefore, one or more widths of the one or more shrinkage cracks 103 also gradually increase from the outer side to the inner side, so that the bending radian of the inner liner 10 can gradually increase from the outer side to the inner side to better conform to the inner wall of the support tube 3.

In order to set the one or more shrinkage cracks 103, the inner liner 10 comprises a trunk 101 and ribs 102 connected to both sides of the trunk 101, and the ribs 102 have a preset bending radian, thereby forming a tubular structure with the trunk 101; and the one or more shrinkage cracks 103 are configured with the ribs 102 along a lengthwise direction of the trunk 101. The ribs 102 disposed on the both sides enable a gap 104 to be formed by the ribs 102 on the both sides that are curved, so that an outer diameter of the tubular structure formed by the inner liner 10 can be varied to conform to the support tube 3 with different sizes.

In addition, in order to avoid pulling clogging caused by coils of the spring 9 being jammed in the one or more shrinkage cracks 103, the one or more widths of the one or more shrinkage cracks 103 after being brought together in this embodiment are smaller than a diameter of the coils of the spring 9, so that this situation can be completely avoided. Furthermore, a thickness of the trunk 101 is equal to a thickness of the ribs 102, so that an outer diameter of the inner liner 10 at all positions are equal, in addition, the trunk 101 can also conform to the inner wall of the support tube 3 without a gap, and the inner liner 10 is easily assembled into the support tube 3. In addition, the inner liner uses TPEE elastic plastic which has a small friction coefficient, friction with the spring and the inner liner is further reduced, and pulling smoothness is further improved.

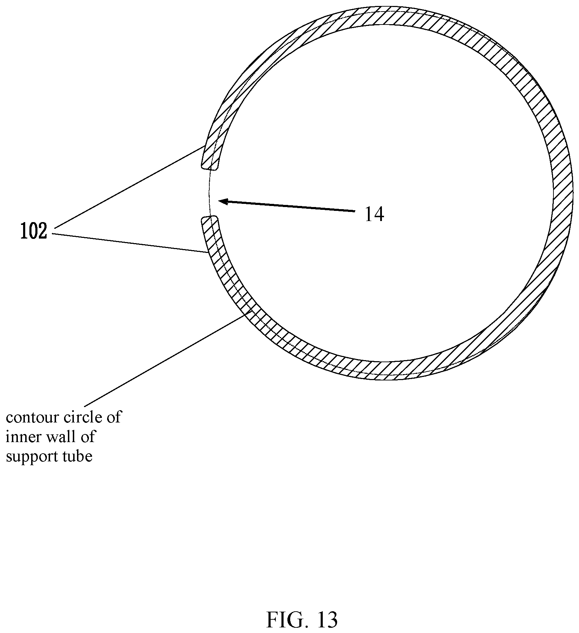

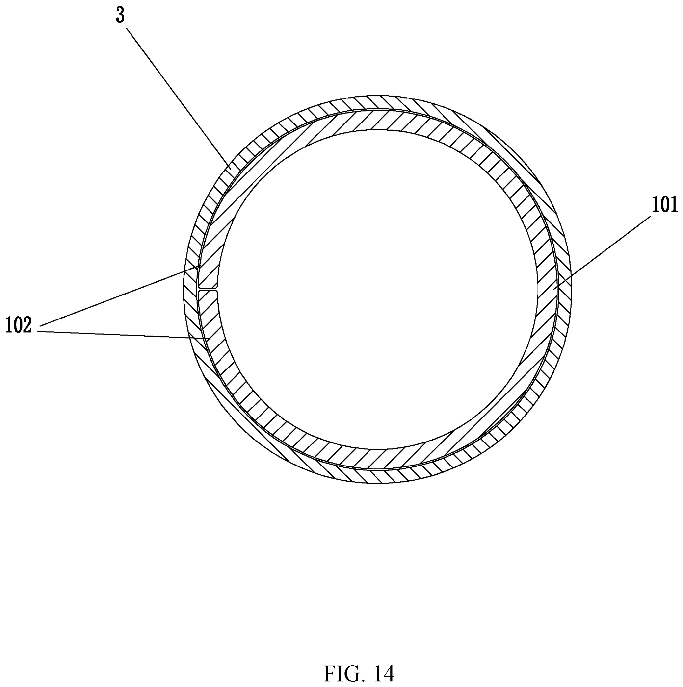

Referring to FIGS. 13 and 14, in this embodiment, an appearance of the inner liner 10 has a straight-tube fish-skeleton shape when the inner liner 10 is in a relaxed state, as opposite sides of the ribs 102 on the both sides of the inner liner 10 are spaced apart to form the gap 104. In this way, the ribs 102 are restricted by the inner wall of the support tube 3 to retract inward to form a circular shape to conform to the inner wall of the support tube 3 after the inner liner 10 is assembled into the support tube 3. In this way, after the inner liner 10 is assembled into the support tube 3, the ribs 102 maintain an outward tensile force, thus preventing the ribs 102 from interfering with a movement of the spring 9 due to curling inward.

### Embodiment 4

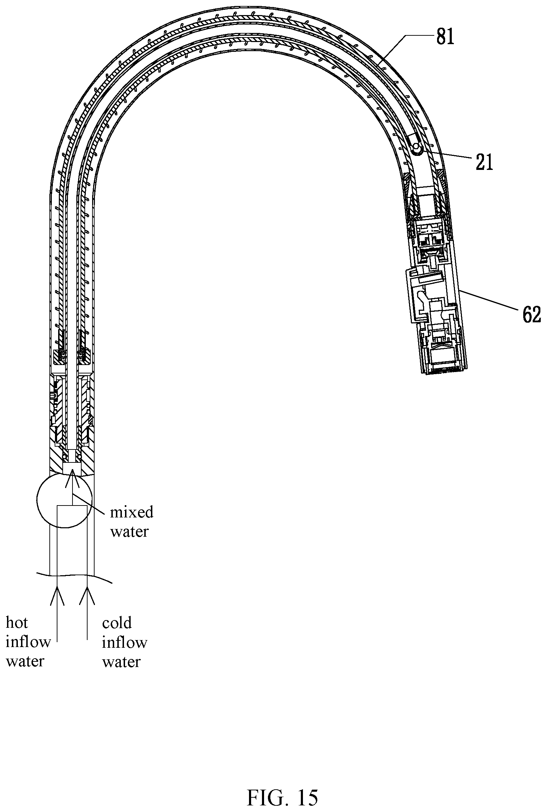

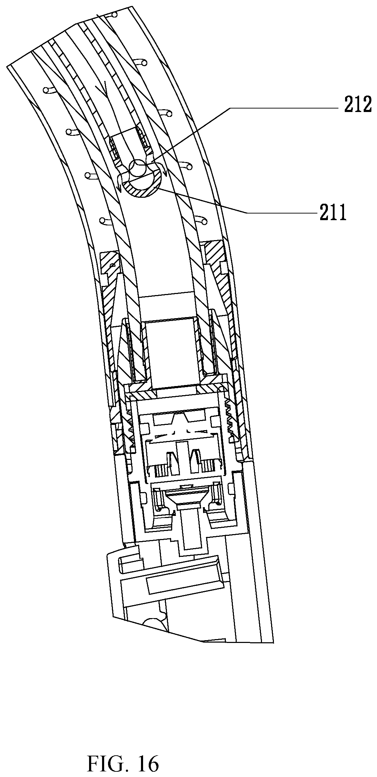

Referring to FIGS. 15 and 16, in this embodiment, in order to prevent the water outflow body 62 in the water outflow assembly 6 from being flushed out and being separated from the support tube 3 under a high water pressure state, an anti-flushing out structure of the pulling faucet without the weight is provided, a water outflow buffer connector 21 is disposed on a water outflow end of the inner tube, and the water outflow buffer connector 21 is fixed to the inner tube by bonding, welding, riveting, or secondary filling package, etc; and the water outflow buffer connector 21 is used to change the water flow flowing along an axial direction of the inner tube into water outflow along a lateral direction of the inner tube. As a water outflow direction changes, a buffering effect is formed, therefore, impact force of the water flow applied on the water outflow body 62 is greatly reduced, the water outflow body 62 will not be separated from the support tube 3 in a non-pulling state even in the high water pressure state.

In order to change the water outlet direction, one end of the water outflow buffer connector 21 along the axial direction of the inner tube is a closed end 211, and one or more water outlets 212 are disposed on a side wall along the radial direction of the inner tube. Therefore, the water flow firstly hits the closed end 211 for buffering and then flows out of the one or more water outlets 212 on a side surface. The number of the one or more water outlets 212 is arbitrary configured as required.

Finally, an outer wall of the water outflow buffer connector 21 described in this embodiment is a circular arc surface. Thus, a friction between the water outflow end of the inner tube 2 and the pulling tube 81 is reduced, the pulling is smoother, especially, when the pulling tube 81 uses a corrugated tube, the problem of the water outlet end of the inner tube 2 being jammed by a groove of the corrugated tube can be avoided.

The present invention may be summarized as follows: The present disclosure discloses a noise reduction structure of a pulling faucet without a weight, it comprises: a support tube, a pulling tube, an elastic restore member and an inner liner; the support tube is connected to a faucet body through an intermediate connector; the elastic restore member is sleeved outside of the pulling tube, and one end is a fixed end and the other end is connected to the pulling tube to form a linkage end; the inner liner is disposed between an inner wall of the support tube and an outer wall of the elastic restore member; and the inner liner comprises one or more shrinkage cracks along the inner wall of the support tube in a direction of a bending radius of the support tube from an outer side to an inner side, so that a portion of the inner liner on both sides of the one or more shrinkage cracks is brought together in a direction along which the one or more shrinkage cracks close when the inner liner passes through and is disposed in the support tube. The present disclosure further discloses an anti-flushing out structure of the pulling faucet without the weight and the pulling faucet without the weight.

The invention may also be summarized as follows:
1. A noise reduction structure of a pulling faucet without a weight, characterized in that, it comprises: a support tube, a pulling tube, an elastic restore member and an inner liner;
   the support tube is connected to a faucet body through an intermediate connector; the elastic restore member is sleeved outside of the pulling tube, and one end is a fixed end and the other end is connected to the pulling tube to form a linkage end; and the inner liner is disposed between an inner wall of the support tube and an outer wall of the elastic restore member; and
   the inner liner comprises one or more shrinkage cracks along the inner wall of the support tube in a direction of a bending radius of the support tube from an outer side to an inner side, so that a portion of the inner liner on both sides of the one or more shrinkage cracks is brought together in a direction along which the one or more shrinkage cracks close when the inner liner passes through and is disposed in the support tube.
2. A noise reduction structure of a pulling faucet without a weight, characterized in that, it comprising: a support tube, a pulling tube, an elastic restore member and an inner liner;
   the support tube is connected to a faucet body through an intermediate connector; the elastic restore member is sleeved outside of the pulling tube, and one end is a fixed end and the other end is connected to the pulling tube to form a linkage end; and the inner liner is disposed between an inner wall of the support tube and an outer wall of the elastic restore member; and
   the inner liner comprises one or more shrinkage cracks along the inner wall of the support tube in a direction of a bending radius of the support tube from an outer side to an inner side, so that the inner liner has a bending radian on the inner side that is greater than that on the outer side in a direction of a bending radius of the support tube when the inner liner passes through and is disposed in the support tube.
3. The noise reduction structure of the pulling faucet without the weight, according to any one or more of items 1-2, characterized in that: the one or more shrinkage cracks have a structure with a width that gradually increases in the direction of the bending radius of the support tube from the outer side to the inner side.
4. The noise reduction structure of the pulling faucet without the weight according to any one or more of items 1 to 3, characterized in that: the inner liner comprises a trunk and ribs connected to both sides of the trunk, and the ribs form a tubular structure with the trunk; and the ribs are configured with the one or more shrinkage cracks along a lengthwise direction of the trunk.
5. The noise reduction structure of the pulling faucet without the weight according to any one or more of items 1 to 4, characterized in that: the elastic restore member is a spring, and a width of the one or more shrinkage cracks is smaller than a diameter of coils of the spring after being brought together.
6. The noise reduction structure of the pulling faucet without the weight according to according to any one or more of items 1 to 5, characterized in that: when the inner liner is in a relaxed state, an appearance of the inner liner has a straight-tube fish-skeleton shape, and opposite ends of the ribs on the both sides of the inner liner are spaced apart to form a gap.
7. The noise reduction structure of the pulling faucet without the weight according to according to any one or more of items 4 to 6, characterized in that: the trunk conforms to the inner wall of the support tube when the inner liner passes through and is disposed in the support tube.
8. The noise reduction structure of the pulling faucet without the weight according to according to any one or more of items 1-7, characterized in that: a material of the inner liner is plastic or hard rubber.
9. A pulling faucet without a weight, characterized in that, it comprises the noise reduction structure according to any one or more of items 1-8 and a water outflow assembly;
   one end of the pulling tube is fixedly connected to the water outflow assembly, the other end extends outward in a radial direction to form a first position-limited surface, an inner wall of one end of the support tube facing the water outflow assembly extends inward in a radial direction to form a second position-limited surface, and the elastic restore member is connected to and is disposed between the first position-limited surface and the second position-limited surface; and
   the first position-limited surface squeezes the elastic restore member to accumulate elastic restore force when the water outflow assembly drives the pulling tube to extend out in a direction away from the support tube.
10. The pulling faucet without the weight according to item 9, characterized in that: the intermediate connector is fixedly connected to the faucet body, and the support tube is rotatably connected to the intermediate connector.
11. The pulling faucet without the weight according to item 9 and/or 10, characterized in that, it further comprises an inner tube; the inner tube passes through and is disposed in the pulling tube, an inner tube connector is connected to a tail end of the inner tube, a position-limited space for clamping the inner tube connector is formed between the intermediate connector and the faucet body, and the position-limited space applies the inner tube a position-limited force along a lengthwise direction of the inner tube.
12. The pulling faucet without the weight according to any one or more of items 9 to 11, characterized in that: a first position-limited member is disposed on a tail end of the pulling tube, and the first position-limited member extends outward along the radial direction of the pulling tube to form the first position-limited surface.
13. The pulling faucet without the weight according to item 12, characterized in that: the pulling tube is fixedly connected to the first position-limited member through a connector; and the connector comprises an insertion portion inserted into the pulling tube and a connection portion disposed outside of the pulling tube, the connection portion extends outward relative to the insertion portion along a radial direction, an outer wall of the connection portion is fixed to the first position-limited member by a thread, and a Y-shaped sealing ring is disposed between an inner wall of the connection portion and an outer wall of an inner tube of the pulling faucet without the weight.
14. The pulling faucet without the weight according to any one or more of items 9 to 13, characterized in that: a second position-limited member is disposed in the one end of the support tube facing the water outflow assembly, and the second position-limited member extends inward along the radial direction to form the second position-limited surface.
15. The pulling faucet without the weight according to item 14, characterized in that: the second position-limited member comprises an avoidance opening configured for the pulling tube to move.
16. The pulling faucet without the weight according to any one or more of items 11 to 15, characterized in that: the inner tube has a hardness of 80-95A, and the pulling tube has a hardness of 70-85A.
17. An anti-flushing out structure of a pulling faucet without a weight, characterized in that: it comprises: a faucet body, an inner tube, a support tube, an elastic restore member, a pulling tube and a water outflow assembly;
   the support tube is connected to the faucet body through an intermediate connector; the elastic restore member is sleeved outside of the pulling tube, and one end is a fixed end and the other end is connected to the pulling tube to form a linkage end; and
   one end of the inner tube is a water inflow end, and a water outflow buffer connector is disposed on the other end; and the water outflow buffer connector is used to change water flow flowing along an axial direction of the inner tube into water outflow along a lateral direction of the inner tube.
18. The anti-flushing out structure of the pulling faucet without the weight according to item 17, characterized in that: one end of the water outflow buffer connector along the axial direction of the inner tube is a closed end, and one or more water outlets are disposed on a side wall along a radial direction of the inner tube.
19. The anti-flushing out structure of the pulling faucet without the weight according to item 18, characterized in that: the one or more water outlets are multiple and are disposed along a circumferential direction of the water outflow buffer connector at intervals.
20. The anti-flushing out structure of the pulling faucet without the weight according to any one or more of items 17 to 19, characterized in that: an outer wall of the water outflow buffer connector is a circular arc surface.
21. A pulling faucet without a weight, characterized in that, it comprises the anti-flushing out structure according to any one or more of items 17-20 and the faucet body;
   one end of the pulling tube is fixedly connected to the water outflow assembly, the other end extends outward in a radial direction to form a first position-limited surface, an inner wall of one end of the support tube facing the water outflow assembly extends inward in a radial direction to form a second position-limited surface, and the elastic restore member is connected to and is disposed between the first position-limited surface and the second position-limited surface; and
   the first position-limited surface squeezes the elastic restore member to accumulate elastic restore force when the water outflow assembly drives the pulling tube to extend out in a direction away from the support tube.
22. The pulling faucet without the weight according to any one or more of items 9 to 21, characterized in that: the intermediate connector is fixedly connected to the faucet body, and the support tube is rotatably connected to the intermediate connector.
23. The pulling faucet without the weight according to item 21 and/or 22, characterized in that: it further comprises the inner tube; the inner tube passes through and is disposed in the pulling tube, an inner tube connector is connected to a tail end of the inner tube, a position-limited space for clamping the inner tube connector is formed between the intermediate connector and the faucet body, and the position-limited space applies the inner tube a position-limited force along a lengthwise direction of the inner tube.
24. The pulling faucet without the weight according to any one or more of items 21 to 23, characterized in that: a first position-limited member is disposed on a tail end of the pulling tube, and the first position-limited member extends outward along the radial direction of the pulling tube to form the first position-limited surface.
25. The pulling faucet without the weight according to item 24, characterized in that: the pulling tube is fixedly connected to the first position-limited member through a connector; the connector comprises an insertion portion inserted into the pulling tube and a connection portion disposed outside of the pulling tube, the connection portion extends outward relative to the insertion portion along a radial direction, an outer wall of the connection portion is fixed to the first position-limited member by a thread, and a Y-shaped sealing ring is disposed between an inner wall of the connection portion and an outer wall of the inner tube.
26. The pulling faucet without the weight according to any one or more of items 21 to 25, characterized in that: a second position-limited member is disposed in the one end of the support tube facing the water outflow assembly, and the second position-limited member extends inward along the radial direction to form the second position-limited surface.
27. The pulling faucet without the weight according to item 26, characterized in that: the second position-limited member comprises an avoidance opening configured for the pulling tube to move.

The preceding description is merely preferred specific embodiments of the present disclosure, and the protective scope of the disclosure is not limited thereto, it is intended that the protective scope of the present disclosure cover equivalent modifications provided they are made based on the content of the specification of the present disclosure.

## Claims

1. A noise reduction structure of a pulling faucet without a weight, **characterized in that**, it comprises: a support tube, a pulling tube, an elastic restore member and an inner liner;
the support tube is connected to a faucet body through an intermediate connector; the elastic restore member is sleeved outside of the pulling tube, and one end is a fixed end and the other end is connected to the pulling tube to form a linkage end; and the inner liner is disposed between an inner wall of the support tube and an outer wall of the elastic restore member; and
the inner liner comprises one or more shrinkage cracks along the inner wall of the support tube in a direction of a bending radius of the support tube from an outer side to an inner side, so that a portion of the inner liner on both sides of the one or more shrinkage cracks is brought together in a direction along which the one or more shrinkage cracks close when the inner liner passes through and is disposed in the support tube.

2. A noise reduction structure of a pulling faucet without a weight, **characterized in that**, it comprising: a support tube, a pulling tube, an elastic restore member and an inner liner;
the support tube is connected to a faucet body through an intermediate connector; the elastic restore member is sleeved outside of the pulling tube, and one end is a fixed end and the other end is connected to the pulling tube to form a linkage end; and the inner liner is disposed between an inner wall of the support tube and an outer wall of the elastic restore member; and
the inner liner comprises one or more shrinkage cracks along the inner wall of the support tube in a direction of a bending radius of the support tube from an outer side to an inner side, so that the inner liner has a bending radian on the inner side that is greater than that on the outer side in a direction of a bending radius of the support tube when the inner liner passes through and is disposed in the support tube.

3. The noise reduction structure of the pulling faucet without the weight, according to any one or more of claims 1-2, **characterized in that**: the one or more shrinkage cracks have a structure with a width that gradually increases in the direction of the bending radius of the support tube from the outer side to the inner side.

4. The noise reduction structure of the pulling faucet without the weight according to any one or more of claims 1 to 3, **characterized in that**: the inner liner comprises a trunk and ribs connected to both sides of the trunk, and the ribs form a tubular structure with the trunk; and the ribs are configured with the one or more shrinkage cracks along a lengthwise direction of the trunk.

5. The noise reduction structure of the pulling faucet without the weight according to any one or more of claims 1 to 4, **characterized in that**: the elastic restore member is a spring, and a width of the one or more shrinkage cracks is smaller than a diameter of coils of the spring after being brought together.

6. The noise reduction structure of the pulling faucet without the weight according to according to any one or more of claims 1 to 5, **characterized in that**: when the inner liner is in a relaxed state, an appearance of the inner liner has a straight-tube fish-skeleton shape, and opposite ends of the ribs on the both sides of the inner liner are spaced apart to form a gap.

7. The noise reduction structure of the pulling faucet without the weight according to according to any one or more of claims 4 to 6, **characterized in that**: the trunk conforms to the inner wall of the support tube when the inner liner passes through and is disposed in the support tube.

8. A pulling faucet without a weight, **characterized in that**, it comprises the noise reduction structure according to any one or more of claims 1-7 and a water outflow assembly;
one end of the pulling tube is fixedly connected to the water outflow assembly, the other end extends outward in a radial direction to form a first position-limited surface, an inner wall of one end of the support tube facing the water outflow assembly extends inward in a radial direction to form a second position-limited surface, and the elastic restore member is connected to and is disposed between the first position-limited surface and the second position-limited surface; and
the first position-limited surface squeezes the elastic restore member to accumulate elastic restore force when the water outflow assembly drives the pulling tube to extend out in a direction away from the support tube.

9. The pulling faucet without the weight according to claim 8, **characterized in that**, it further comprises an inner tube; the inner tube passes through and is disposed in the pulling tube, an inner tube connector is connected to a tail end of the inner tube, a position-limited space for clamping the inner tube connector is formed between the intermediate connector and the faucet body, and the position-limited space applies the inner tube a position-limited force along a lengthwise direction of the inner tube,
wherein preferably the inner tube has a hardness of 80-95A, and/or the pulling tube has a hardness of 70-85A.

10. An anti-flushing out structure of a pulling faucet without a weight, **characterized in that**: it comprises: a faucet body, an inner tube, a support tube, an elastic restore member, a pulling tube and a water outflow assembly;
the support tube is connected to the faucet body through an intermediate connector; the elastic restore member is sleeved outside of the pulling tube, and one end is a fixed end and the other end is connected to the pulling tube to form a linkage end; and
one end of the inner tube is a water inflow end, and a water outflow buffer connector is disposed on the other end; and the water outflow buffer connector is used to change water flow flowing along an axial direction of the inner tube into water outflow along a lateral direction of the inner tube.

11. The anti-flushing out structure of the pulling faucet without the weight according to claim 10, **characterized in that**: one end of the water outflow buffer connector along the axial direction of the inner tube is a closed end, and one or more water outlets are disposed on a side wall along a radial direction of the inner tube.

12. The anti-flushing out structure of the pulling faucet without the weight according to claim 11, **characterized in that**: the one or more water outlets are multiple and are disposed along a circumferential direction of the water outflow buffer connector at intervals.

13. The anti-flushing out structure of the pulling faucet without the weight according to any one or more of claims 10 to 12, **characterized in that**: an outer wall of the water outflow buffer connector is a circular arc surface.

14. A pulling faucet without a weight, **characterized in that**, it comprises the anti-flushing out structure according to any one or more of claims 10-13 and the faucet body;
one end of the pulling tube is fixedly connected to the water outflow assembly, the other end extends outward in a radial direction to form a first position-limited surface, an inner wall of one end of the support tube facing the water outflow assembly extends inward in a radial direction to form a second position-limited surface, and the elastic restore member is connected to and is disposed between the first position-limited surface and the second position-limited surface; and
the first position-limited surface squeezes the elastic restore member to accumulate elastic restore force when the water outflow assembly drives the pulling tube to extend out in a direction away from the support tube.

15. The pulling faucet without the weight according to claim 14, **characterized in that**: it further comprises the inner tube; the inner tube passes through and is disposed in the pulling tube, an inner tube connector is connected to a tail end of the inner tube, a position-limited space for clamping the inner tube connector is formed between the intermediate connector and the faucet body, and the position-limited space applies the inner tube a position-limited force along a lengthwise direction of the inner tube.

16. The pulling faucet without the weight according to claim 8 and/or 9 or 14 and/or 15, **characterized in that**: a first position-limited member is disposed on a tail end of the pulling tube, and the first position-limited member extends outward along the radial direction of the pulling tube to form the first position-limited surface.

17. The pulling faucet without the weight according to claims 8 and/or 9 or according to any one or more of claims 14 to 16, **characterized in that**: a second position-limited member is disposed in the one end of the support tube facing the water outflow assembly, and the second position-limited member extends inward along the radial direction to form the second position-limited surface, wherein preferably the second position-limited member comprises an avoidance opening configured for the pulling tube to move.
